Europäisches Patentamt

European Patent Office

Office européen des brevets

(19)

(11) Numéro de publication: **0 254 606**
**B1**

(12) **FASCICULE DE BREVET EUROPEEN**

(45) Date de publication du fascicule du brevet:
31.10.90

(51) Int. Cl.⁵: **F16D 65/22**

(21) Numéro de dépôt: 87401337.8

(22) Date de dépôt: 15.06.87

(54) **Dispositif protecteur pour arbres de manoeuvre de freins à tambour de camion.**

(30) Priorité: 24.06.86 FR 8609245

(43) Date de publication de la demande:
27.01.88 Bulletin 88/4

(45) Mention de la délivrance du brevet:
31.10.90 Bulletin 90/44

(84) Etats contractants désignés:
AT BE CH DE ES FR GB GR IT LI LU NL SE

(56) Documents cités:
EP-A- 0 098 906
DE-A- 1 455 788
DE-B- 1 208 569
DE-C- 871 565
FR-A- 1 298 556
US-A- 2 892 662

(73) Titulaire: Mamery, Gaby Eugène, Loisy-sur-Marne
F-51300 Vitry-le-François(FR)

(72) Inventeur: Mamery, Gaby Eugène, Loisy-sur-Marne
F-51300 Vitry-le-François(FR)

(74) Mandataire: Gérardin, Robert Jean René, PROT'INNOV
INTERNATIONAL SA Résidence de l'Observatoire
avenue Georges Clémenceau Boîte Postale 2764,
F-51066 Reims Cédex(FR)

## Description

L'invention concerne les dispositifs protecteurs d'arbres de manœuvre de freins à tambour de camions ou de remorques routières.

Sur les dispositifs d'actionnement de freins à tambour de camions ou de remorques les plus couramment utilisés, la came, servant à écarter les mâchoires de freins, est actionnée par l'intermédiaire d'un arbre, d'un levier et d'une tringlerie. L'arbre est maintenu par deux paliers à bague, solidaires respectivement de l'essieu et du pont. Le graissage des paliers s'effectue à la graisse, au montage et lors des opérations d'entretien du système de freinage. Le tronçon d'arbre de manœuvre situé entre les paliers, ainsi que la face interne de ceux-ci, sont en permanence soumis aux projections d'eau et de particules solides.

Il résulte de cette situation que les projections d'eau et de sable finissent par pénétrer dans les paliers, entre l'arbre et les bagues, et à se mélanger à la graisse pour constituer une sorte de pâte abrasive, qui provoque un grippage des bagues sur l'arbre. Ce grippage a pour conséquence d'entraîner la rotation des bagues par rapport aux paliers. Cette rotation s'effectuant sans aucun graissage, un jeu important ne tarde pas à apparaître ; d'autant que l'espace laissé entre les bagues et les paliers se remplit lui-même de sable et d'eau. Le fait que l'arbre n'effectue pas une rotation complète et que celui-ci est toujours sollicité dans la même direction, par la came et le levier, entraîne une localisation de l'usure dans un secteur particulier. Il résulte de ceci, un désalignement de l'arbre par rapport à l'axe des paliers et un décalage, parfois important, de la came de manœuvre des mâchoires de freins par rapport au plan de symétrie des tambours.

Différents dispositifs, visant à faire varier la position des mâchoires de freins par rapport au tambour, afin d'entretenir un jeu convenable entre les garnitures de freins et le tambour, existent déjà : le plus répandu consiste à monter sur excentrique les pivots d'articulation des mâchoires.

De tels dispositifs visent essentiellement à compenser un jeu excessif entre mâchoires et tambour de freins, consécutif à une usure normale des garnitures, et non à empêcher ou à compenser un débattement transversal de la came de commande des mâchoires, dû au grippage des douilles des paliers sur l'arbre de manœuvre de la came et au débattement de celles-ci dans leur palier.

Le dispositif de protection selon l'invention, vise à empêcher le grippage des douilles des paliers sur l'arbre de manœuvre de la came de commande des mâchoires de freins et à éliminer tout risque de pollution de la graisse par l'eau et les particules solides.

On connaît déjà un dispositif correspondant au préambule de la revendication 1 (EP-A- 0 098 906). L'arbre de manœuvre de la came de commande des mâchoires de frein est monté dans un carter tubulaire, servant de réserve de graisse, équipé à chaque extrémité de bagues munies de garnitures d'étanchéité, d'un graisseur et d'un ou de plusieurs clapets de surpression. L'une des extrémités de la bague située du côté de la came est introduite dans un palier solidaire de l'essieu, à la place de la douille d'origine, et la bague située du côté du levier de manœuvre possède une collerette torique destinée à se loger dans un boîtier en deux parties fixé au pont de liaison des roues du même train. Le carter tubulaire de protection et les bagues sont réalisés en une seule pièce, en matière plastique.

Compte-tenu de la réalisation en matière plastique des deux bagues, de la longueur limitée de celles-ci et du débattement sectoriel de l'arbre de manœuvre, les bagues s'usent assez rapidement dans le secteur concerné : ce qui se traduit par un accroissement du jeu. La bague située du côté du levier de manœuvre est reliée au pont de liaison des roues par l'intermédiaire du boîtier, en deux parties, habituel : ce qui oblige à munir ladite bague d'une collerette torique de dimensions appropriées.

La présente invention a pour but de remédier à ces inconvénients. Cette invention, telle qu'elle est caractérisée dans les revendications, résout le problème consistant à créer un dispositif de protection de l'arbre de manœuvre de la came de commande des mâchoires de freins à tambour qui soit simple, efficace et fiable.

Le dispositif, selon l'invention, est défini par les caractéristiques de la revendication 1.

L'alésage de la bague est désaxé, vers le haut, d'une distance X, égale à la moitié du jeu ménagé entre l'arbre de manœuvre et l'alésage de la bague. Ce jeu étant d'environ 1mm.

La bague comporte intérieurement, sur toute sa longueur, une plaque d'usure couvrant un secteur correspondant au débattement angulaire de la came de manœuvre des mâchoires de freins et, extérieurement, au niveau du palier et sur toute sa circonférence, une coquille de renfort de longueur un peu supérieure à celle du palier. La plaque d'usure et la coquille comportent des multi-perforations facilitant leur solidarisation à la bague par surmoulage, lors du moulage de celle-ci.

Le moyen de fixation de la bague, au pont de liaison des roues, est constitué d'une patte, moulée avec la bague, située à la partie inférieure et dans le plan de symétrie de celle-ci.

La bague, la plaque d'usure, le graisseur et la patte de fixation au pont de liaison des essieux, ont un plan de symétrie commun.

La plaque d'usure, le graisseur et la patte de fixation directe de la bague au pont de liaison des essieux, sont situés à la partie inférieure de la bague.

Les avantages obtenus, grâce à cette invention, consistent essentiellement en ceci, que la came de commande des mâchoires de freins conserve sa position idéale, même après de très nombreuses sollicitudes, quelles que soient les conditions ambiantes ainsi que la nature et l'importance des projections reçues par le dispositif de manœuvre; ce qui permet de n'utiliser qu'une pression d'air réduite pour actionner les deux mâchoires de freins et d'obtenir une synchronisation parfaite du freinage sur l'ensemble des roues, ainsi qu'une grande souplesse dans le freinage.

D'autres caractéristiques et avantages apparaîtront dans la description qui va suivre d'un dispositif selon l'invention donné à titre d'exemple non limitatif au regard des dessins annexés sur lesquels :

– la figure 1 représente une vue en coupe longitudinale du dispositif monté,

– la figure 2 représente une vue en coupe transversale du dispositif,

– la figure 3 représente une vue en coupe longitudinale partielle du dispositif montrant son moyen de fixation au pont de liaison des deux roues.

Les figures représentent un dispositif de protection de l'arbre de manœuvre 1, de la came 3 de commande des mâchoires de freins à tambour, constitué essentiellement d'une longue bague 4, montée dans le palier 5, entourant l'arbre 1 jusqu'au levier d'actionnement 2. Cette bague 4 est munie intérieurement, à chacune de ses extrémités, d'une garniture d'étanchéité 6. Elle comporte, à sa partie inférieure, un graisseur 7 et un orifice de trop plein 4e et, à son extrémité opposée à la came 3, une collerette torique 4a et une clavette d'indexation 4b, assurant la fixation au pont 8 par l'intermédiaire du boîtier 9 (non revendigué), ou d'une patte 4c assurant la même fonction comme revendiquée. La bague 4 est munie, sur toute sa longueur, d'une plaque d'usure sectorielle 10 comportant des multi-perforations 10a et, au niveau du palier, d'une coquille de renfort périphérique 11 à multi-perforation 11a.

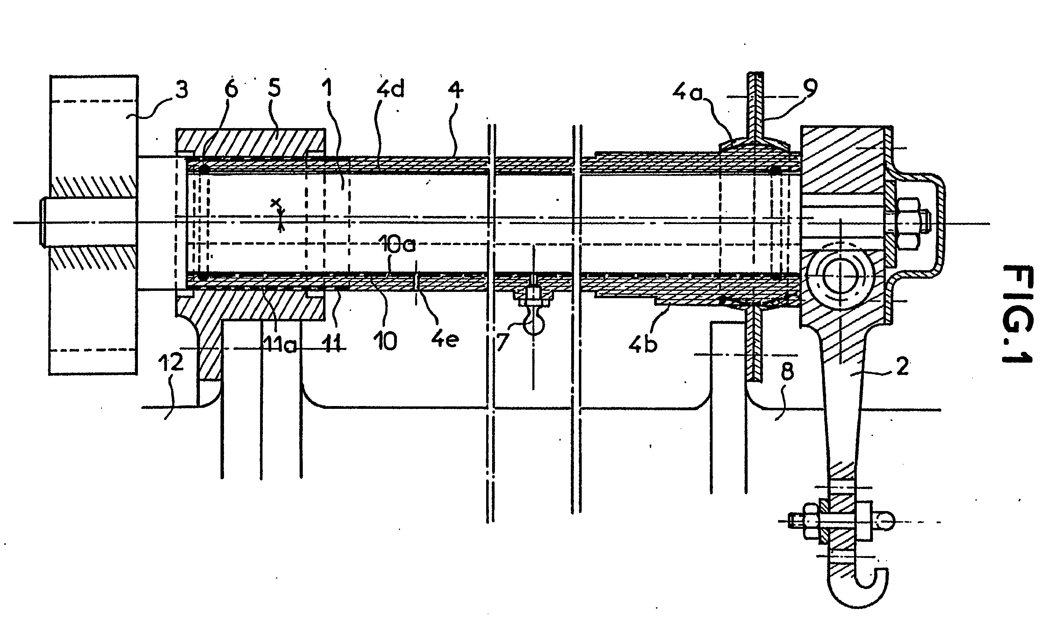

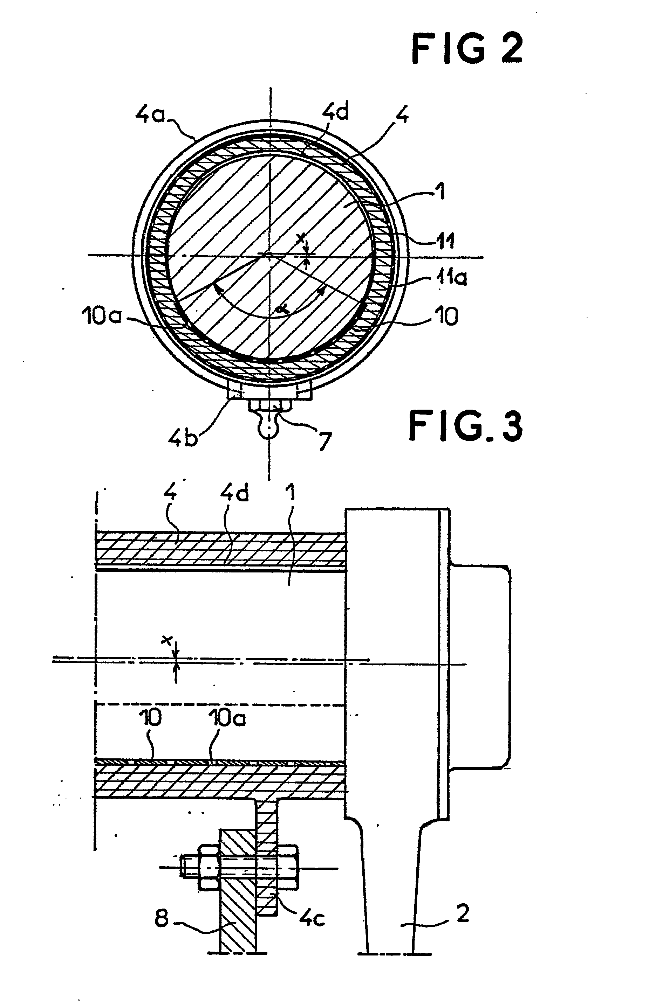

En examinant les figures 1 et 2, on remarque que la bague 4, montée dans le palier 5 solidai re de l'essieu 12, est prolongée jusqu'au levier d'actionnement 2 pour protéger entièrement l'arbre de manœuvre 1, compte-tenu que l'alésage 4d de cette bague 4 est muni, à chacune de ses extrémités, d'une garniture d'étanchéité 6.

Afin d'éviter une usure trop rapide et localisée de la bague 4, compte-tenu du débattement limité de la came 3, l'alésage 4d de la bague 4 comporte, sur toute sa longueur, sur un secteur correspondant à l'angle α de débattement de la came 3, une plaque d'usure surmoulée, par l'intermédiaire des multiperforations 10a, lors de l'injection de la matière plastique utilisée pour la fabrication de la bague protectrice 4.

Afin de compenser l'usure antérieure du palier 5, la bague 4 est munie à sa périphérie, du côté du palier 5, sur une longueur supérieure à la largeur du palier, d'une coquille ou d'une demi-coquille 11 surmoulée, lors de l'injection de la bague 4, par l'intermédiaire des multi-perforations 11a.

Pour permettre le graissage, et éviter tout serrage de la bague protectrice 4 sur l'arbre 1 sous l'effet de la température, un jeu, d'environ **1mm**, est ménagée entre l'arbre de manœuvre 1 et l'alésage 4d de la bague 4 : ce qui rend nécessaire un désaxage **X**, vers le haut, de l'alésage 4d par rapport à l'axe de la bague 4, correspondant à la moitié du jeu; afin que l'arbre de manœuvre 1 soit maintenu dans l'axe du palier 5, malgré le jeu existant entre cet arbre 1 et l'alésage 4d de la bague 4. Compte-tenu du désaxage, il est important que la bague 4 soit bien positionnée angulairement lors du montage ; aussi, le graisseur 7 et la clavette d'indexation 4b, ou la patte de fixation 4c au pont de liaison 8 des essieux 12, sont-ils, lors de la fabrication, exactement situés dans le plan de symétrie de la bague 4, à la partie inférieure de celle-ci. La bague 4 comporte un orifice de trop plein 4e permettant l'élimination de l'excès de graisse.

Comme on le remarque, en comparant les figures 1 et 3, la bague 4 est fixée au pont 8 par l'intermédiaire de la collerette torique 4a et du boîtier 9 en deux parties existant à l'origine ou, préférentiellement et comme revendiqué, par l'intermédiaire d'une patte 4c, moulée avec la bague 4 et située à la partie inférieure de celle-ci, qui offre, de plus, l'avantage d'assurer un indexage direct de la bague.

Le dispositif de protection selon l'invention, peut-être utilisé sur la plupart des véhicules équipés de freins à tambour, dont la came de commande des mâchoires est manœuvrée, à distance, par l'intermédiaire d'un arbre, d'un levier et d'une tringlerie.

Des applications intéressantes existent sur les camions, les remorques, les matériels agricoles et les engins à roues de toutes sortes, fréquemment utilisés sur route, sur piste ou en tout terrain.

**Revendications**

1. Dispositif de protection de l'arbre de manœuvre de la came de commande des mâchoires de freins à tambour de camions ou de remorques routières, constitué du prolongement de la bague du palier de l'arbre de manœuvre jusqu'au levier d'actionnement de l'arbre de manœuvre, dont l'alésage est muni, à chacune de ses extrémités, d'une garniture d'étanchéité; ledit dispositif comportant un graisseur, un orifice de trop plein et un moyen de fixation au pont de liaison des essieux, caractérisé en ce que l'alésage (4d) de la bague (4) est désaxé, vers le haut, d'une distance (X) égale à la moitié du jeu existant entre l'arbre de manœuvre (1) et l'alésage (4d) de la bague (4), en ce que la bague (4) comporte, intérieurement et sur toute sa longueur, une plaque d'usure (10) couvrant un secteur correspondant au débattement angulaire (α) de la came de manœuvre (3) des mâchoires de freins et, extérieurement, au niveau du palier et sur toute sa circonférence, une coquille de renfort (11) de longueur un peu supérieure à la largeur du palier (5), et en ce que son moyen de fixation au pont de liaison (8) des essieux (12) est constitué d'une patte (4c), moulée avec la bague (4), située à la partie inférieure et dans le plan de symétrie de celle-ci.

2. Dispositif de protection, selon la revendication 1, caractérisé en ce que le jeu existant entre l'arbre de manœuvre (1) et l'alésage (4d) de la bague (4) est d'environ 1mm.

3. Dispositif de protection, selon la revendication 1, caractérisé en ce que la plaque d'usure (10) et la coquille de renfort (11) de la bague (4) sont munies de multi-perforations (10a, 11a) permettant leur solidarisation à la bague (4), par surmoulage, lors du moulage de celle-ci.

4. Dispositif de protection, selon la revendication 1, caractérisé en ce que la bague (4), la plaque d'usure (10), le graisseur (7) et la patte (4c) de fixation au pont de liaison (8) des essieux (12), ont un plan de symétrie commun.

5. Dispositif de protection, selon la revendication 1, caractérisé en ce que la plaque d'usure (10), le graisseur (7) et la patte (4c) de fixation directe de la bague (4) au pont de liaison (8) des essieux (12) sont situés à la partie inférieure de la bague.

## Patentansprüche

1. Sicherungsanordnung bzw. Schutzvorrichtung für die Steuerwelle des Betätigungsnockens der Backen von Trommelbremsen von Lastkraftwagen oder Transportanhängern, bestehend aus der Verlängerung des Ringes des Lagers der Steuerwelle bis zum Betätigungshebel der Steuerwelle, deren Bohrung an jedem ihrer Enden mit einer Wellendichtung versehen ist; die genannte Anordnung umfassend eine Schmiereinrichtung, eine Überlauföffnung und eine Befestigungseinrichtung an der Verbindungsbrücke der Achsen, dadurch gekennzeichnet, daß die Bohrung (4d) des Ringes (4) nach oben um einen Abstand (X) gleich der Hälfte des Spiels bzw. Freiraums zwischen der Steuerwelle (1) und der Bohrung (4d) des Ringes (4) achsversetzt ist, daß der Ring (4) innen und über seine gesamte Länge mit einer Verschleißplatte (10) versehen ist, die einen Abschnitt bedeckt, der der Winkelverschiebbarkeit bzw. dem Winkelausschlag ($\alpha$) des Betätigungsnockens (3) der Bremsbacken entspricht, und außen auf der Höhe des Lagers und über seinen gesamten Umfang eine Verstärkungsschale (11) aufweist, deren Länge etwas größer ist als die Breite des Lagers (5), und daß die Befestigungseinrichtung der Anordnung an der Verbindungsbrücke (8) der Achsen (12) von einer einstückig mit dem Ring (4) geformten Klaue bzw. Lasche (4c) gebildet wird, die im unteren Abschnitt und in der Symmetrieebene desselben gelegen ist.

2. Sicherungsanordnung bzw. Schutzvorrichtung nach Anspruch 1, dadurch gekennzeichnet, daß das Spiel bzw. der Freiraum, das bzw. der zwischen der Steuerwelle (1) und der Bohrung (4d) des Ringes (4) besteht, etwa 1 mm beträgt.

3. Sicherungsanordnung bzw. Schutzvorrichtung nach Anspruch 1, dadurch gekennzeichnet, daß die Verschleißplatte (10) und die Verstärkungsschale (11) des Ringes (4) mit Multiperforationen (10a, 11a) versehen sind, die ihre Befestigung am Ring (4) durch Anformen beim Formen desselben ermöglichen.

4. Sicherungsanordnung bzw. Schutzvorrichtung nach Anspruch 1, dadurch gekennzeichnet, daß der Ring (4), die Verschleißplatte (10), die Schmiereinrichtung (7) und die Befestigungsklaue bzw. -lasche (4c) an der Verbindungsbrücke (8) der Achsen (12) eine gemeinsame Symmetrieebene aufweisen.

5. Sicherungsanordnung bzw. Schutzvorrichtung nach Anspruch 1, dadurch gekennzeichnet, daß die Verschleißplatte (10), die Schmiereinrichtung (7) und die Klaue bzw. Lasche (4c) für die direkte Befestigung des Ringes (4) an der Verbindungsbrücke (8) der Achsen (12) im unteren Abschnitt des Ringes gelegen sind.

## Claims

1. Protecting device for the operating shaft of the control cam of the drum brake shoes of trucks or road trailers, consisting in the prolongation of the bush of the bearing of the operating shaft as far as the actuating lever of the operating shaft, the bore of which is provided, at each of its ends, with a seal; the said device comprising a lubricator, an overflow orifice and a means for fixing to the connecting support for the axles, characterized in that the bore (4d) of the bush (4) is offset upwards by a distance (X) equal to half the clearance existing between the operating shaft (1) and the bore (4d) of the bush (4), in that the bush (4) comprises, on the inside and over all its length, a wearing plate (10) covering a sector corresponding to the angular movement alpha of the operating cam (3) of the brake shoes and, on the outside, at the level of the bearing and over all its circumference, a reinforcing shell (11) of a length slightly greater than the width of the bearing (5), and in that its means for fixing to the connecting support (8) for the axles (12) consists of a lug (4c), moulded with the bush (4), situated on the lower part and in the plane of symmetry of the latter.

2. Protecting device according to Claim 1, characterized in that the clearance existing between the operating shaft (1) and the bore (4d) of the bush (4) is about 1 mm.

3. Protecting device according to Claim 1, characterized in that the wearing plate (10) and the reinforcing shell (11) of the bush (4) are provided with multiple perforations (10a, 11a) permitting them to be joined to the bush (4) by overmoulding during the moulding of the latter.

4. Protecting device according to Claim 1, characterized in that the bush (4), the wearing plate (10), the lubricator (7) and the lug (4c) for fixing to the connecting support (8) for the axles (12) have a common plane of symmetry.

5. Protecting device according to Claim 1, characterized in that the wearing plate (10), the lubricator (7) and the lug (4c) for direct fixing of the bush (4) to the connecting support (8) for the axles (12) are situated on the lower part of the bush.

# FIG.1

## FIG 2

## FIG. 3